# EUROPÄISCHE PATENTANMELDUNG

(11) **EP 4 521 288 A2**
(43) Veröffentlichungstag der Anmeldung: **12.03.2025**
(21) Anmeldenummer: 24216347.5
(22) Anmeldetag: 18.06.2018
(51) Int. Cl.: G06F 30/15

(54) **VERFAHREN ZUR DATENBANKGESTÜTZTEN KONFIGURIERUNG UND ZUR VISUALISIERUNG EINES NUTZFAHRZEUGS**

(30) Priorität: 22.06.2017 DE 102017113819
(62) Teilanmeldung aus: 18178230.1
(71) Anmelder: BPW Bergische Achsen Kommanditgesellschaft, 51674 Wiehl (DE)
(72) Erfinder: Grimmig, Kai-Ingmar, 51674 Wiehl-Bielstein (DE)
(74) Vertreter: DREISS Patentanwälte PartG mbB

(57) **Zusammenfassung**

Vorgeschlagen wird ein Verfahren zur datenbankgestützten Konfigurierung und Visualisierung eines aus einem Fahrzeugchassis und einem dazu passenden Achsaggregat kombinierbaren Nutzfahrzeugs. Um ein Verfahren zu schaffen, welches einen technische Geschäftsgeheimnisse wahrenden Ausgleich der Interessen des Fahrzeugherstellers und des Anbieters ermöglicht, erfolgt die Konfigurierung durch
- Auswahl von Komponenten (3, 7) des Achsaggregats aus in einer Datenbank (4) zusammengefassten Gruppen (5, 8) von Komponenten,
- einen Vergleich der Kompatibilität der Komponenten (3, 7),

Die Visualisierung erfolgt, indem
- zu den konfigurierten Komponenten (3, 7) jeweils Datensätze (3A, 7A) aufgerufen werden, welche im Wege einer Datenreduktion aus in einer Konstruktionsdatenbank (10) gespeicherten Konstruktionsdatensätzen abgeleitet sind,
- mittels einer Verknüpfungssroutine (14) die Datensätze zu einem die Komponenten (3, 7) des Achsaggregats in zusammengebautem Zustand beschreibenden Kombinationsdatensatz (15) verknüpft werden,
- der Kombinationsdatensatz (15) in ein zu dem Konstruktionsdatenformat kompatibles Datenformat konvertiert wird, und der Kombinationsdatensatz (15K) zur Verwendung durch den Kunden freigeschaltet wird,
- kundenseitig aus den Konstruktionsdaten (1) des Fahrzeugchassis und dem konvertierten Kombinationsdatensatz (15K) eine gemeinsame Datei (20) erstellt und visualisiert wird.

## Beschreibung

Die Erfindung betrifft ein Verfahren zur datenbankgestützten Konfigurierung und zur Visualisierung eines aus einem Fahrzeugchassis und einem dazu passenden Achsaggregat kombinierbaren Nutzfahrzeugs, wobei das Achsaggregat Produkt eines Anbieters, und das Fahrzeugchassis Produkt eines Kunden ist, und nur dem Kunden Konstruktionsdaten des Fahrzeugchassis in einem Konstruktionsdatenformat vorliegen.

Nutzfahrzeuge, insbesondere Nutzfahrzeuganhänger und sogenannte Sattelauflieger sind zumeist insoweit modulartig aufgebaut, als der Nutzfahrzeughersteller sein mehr oder weniger standardisiertes Chassis verwendet, unter welches dann das Achsaggregat oder die Achsaggregate montiert werden. Auch das Achsaggregat, welches sich als Baugruppe aus der eigentlichen Radachse mit den Fahrzeugrädern, den Bremsen, den Elementen der Fahrzeugfederung und den Stoßdämpfern zusammensetzt, ist heutzutage zumeist ein Modul, welches der Nutzfahrzeughersteller von einem spezialisierten Achshersteller bezieht. Bei der Herstellung eines Nutzfahrzeug-Sattelaufliegers zum Beispiel, werden üblicherweise drei derartige Achsaggregate an dem Fahrzeugrahmen des Nutzfahrzeugs befestigt, was zumeist durch Verschrauben oder teils auch durch Verschweißen erfolgt. Zusätzlich am Fahrzeugrahmen zu montieren sind Peripherieelemente der Fahrzeugbremsen, wobei dem Fahrzeughersteller auch hier ein Sortiment mehr oder weniger standardisierter Baugruppen von Anbauteilen zur Verfügung steht.

Die Verfügbarkeit standardisierter bzw. modulartiger Baugruppen bedeutet aber nicht, dass für jedes Fahrzeug auch jede Baugruppe geeignet ist. Bereits die fahrzeugabhängige Tonnage, also die zulässige Gewichtslast des Fahrzeugs, erfordert die Verwendung spezifizierter, für diese Belastung passender Baugruppen. Aber auch die Anschlussmaße der Befestigung der Baugruppen am Fahrzeugrahmen sind nicht beliebig kombinierbar, sondern sie sind bei der Konfiguration des Nutzfahrzeugs aufeinander abzustimmen, indem aus dem breiten Sortiment des Achsaggregate-Anbieters nur Fahrwerksteile mit den passenden Anschlussmaßen und -geometrien ausgewählt werden.

Daher ist es üblich, dass der Fahrzeughersteller die Konfiguration der für das Fahrzeug optimalen Fahrwerksgruppe in enger Abstimmung mit dem spezialisierten Anbieter, also dem Achshersteller bzw. dem Achsaggregate-Hersteller durchführt.

Das Interesse des Fahrzeugherstellers geht allerdings auch dahin, bereits in der Konstruktionsphase nicht nur mit den eigenen, das Fahrzeug selbst betreffenden Konstruktionsdaten arbeiten zu können, sondern auch bereits mit Daten der noch nicht zugelieferten Achsaggregate. Denn stehen dem Fahrzeughersteller solche Daten vorab zur Verfügung, kann er, zum Beispiel für seinen eigenen Kunden, das Fahrzeug komplett, d. h. einschließlich der Achsaggregate, visualisieren und dem eigenen Kunden so anbieten.

Andererseits ist es nicht im Interesse des Achslieferanten, die eigenen Konstruktionsdaten freizugeben, da sich dahinter häufig wichtiges Know-How des Anbieters verbirgt.

Der Erfindung liegt die Aufgabe zugrunde, ein Verfahren zur datenbankgestützten Konfigurierung und Visualisierung eines aus einem Fahrzeugchassis und einem dazu passenden Achsaggregat kombinierbaren Nutzfahrzeugs zu schaffen, welches einen datentechnisch und die der Wahrung technischer Geschäftsgeheimnisse sinnvollen Ausgleich ermöglicht zwischen den genannten Interessen einerseits des Fahrzeugherstellers und andererseits des Anbieters des Achsaggregats.

Zur Lös u n g wird ein Verfahren zur datenbankgestützten Konfigurierung und Visualisierung mit den Merkmalen des Patentanspruchs 1 vorgeschlagen. Vorausgesetzt wird bei dem Verfahren, dass das Achsaggregat Produkt eines Anbieters, und das Fahrzeugchassis Produkt eines Kunden ist, und nur dem Kunden, also dem Fahrzeughersteller,
Konstruktionsdaten des Fahrzeugchassis in einem Konstruktionsdatenformat vorliegen.

Der erste Hauptschritt, also die Konfigurierung des Achsaggregats, erfolgt auf einer durch den Anbieter des Achsaggregats für den Kunden freigeschalteten Nutzeroberfläche durch
- Auswahl einer ersten Komponente des Achsaggregats aus einer in einer Datenbank zusammengefassten Gruppe erster Komponenten,
- Auswahl mindestens einer weiteren Komponente des Achsaggregats aus einer in der Datenbank zusammengefassten Gruppe weiterer Komponenten, einen spätestens nach dem letzten Auswahlschritt durchgeführten Vergleich der
- Kompatibilität der Komponenten, wobei Vergleichsparameter das Korrespondieren der mechanischen Verbindungen der Komponenten und/oder der Belastungsauslegung der Komponenten sind.

Die Visualisierung erfolgt, indem
zu den konfigurierten Komponenten jeweils Datensätze aufgerufen werden, welche im Wege einer Datenreduktion aus den in einer Konstruktionsdatenbank gespeicherten Konstruktionsdatensätzen der Komponenten abgeleitet sind,
   - mittels einer Verknüpfungsroutine die Datensätze zu einem die Komponenten des Achsaggregats in zusammengebautem Zustand beschreibenden Kombinationsdatensatz verknüpft werden, wobei Verknüpfungskriterium die Position und die Anordnung der mechanischen Verbindungen der Komponenten
   - sind,
der Kombinationsdatensatz in ein Datenformat konvertiert wird, welches zu dem Konstruktionsdatenformat kompatibel ist, und der so konvertierte Kombinationsdatensatz zur Verwendung durch den Kunden freigeschaltet wird,
kundenseitig aus den Konstruktionsdaten des Fahrzeugchassis und dem konvertierten Kombinationsdatensatz eine gemeinsame Datei erstellt, und diese auf einem Bildschirm visualisiert wird.

Erfindungsgemäß ist es vorteilhaft, wenn die Nutzeroberfläche eine Server- bzw. webbasierte Oberfläche ist, auf die der Kunde über einen mit dem Internet verbundenen Rechner zugreifen kann. Auf dieser Oberfläche können die Komponenten der Achsaggregate visuell dargestellt sein und vom Kunden ausgewählt werden, beispielsweise per Drag-and-Drop. In diesem Zusammenhang kann es vorteilhaft sein, die Nutzeroberfläche als Drag-and-Drop Oberfläche auszugestalten.

Auch können die Komponenten des Aggregats in Gruppen von Auswahlkomponenten zusammengefasst sein, aus welchen der Kunde die gewünschten Komponenten auswählt und/oder per Drag-and-Drop von einem Auswahlbereich auf einen Selektionsbereich zieht. Die den Komponenten zugrunde liegenden technischen Daten sind in einer Datenbank abgelegt, auf welche die Nutzeroberfläche zugreifen und die Komponenten und/oder die technischen Daten somit visuell darstellen kann. Die Auswahl kann seitens des Kunden bestätigt werden.

Zudem ist es im Rahmen des erfindungsgemäßen Verfahrens von Vorteil, dass der Vergleich der Kompatibilität der Komponenten mit einer Rechenroutine erfolgt, die mit der Nutzeroberfläche gekoppelt ist. Einerseits kann dabei die Kompatibilität der vom Kunden ausgewählten Komponenten des Achsaggregats überprüft werden, andererseits auch die Kompatibilität zwischen den Komponenten des Achsaggregats und dem Fahrzeugchassis, sofern dies vom Kunden gewünscht ist. Die unmittelbare Kopplung zwischen Rechenroutine und Nutzeroberfläche ermöglicht eine interaktive Kommunikation und schnelle Überprüfung sowie Anzeige der Vergleichsergebnisse. Die Rechenroutine kann sich dabei auf dem gleichen Server befinden wie die Nutzeroberfläche. Auch kann sich die Rechenroutine auf einem anderen Server befinden, sofern eine signaltechnische Kommunikation zwischen der Rechenroutine und dem Server gewährleistet ist. Zusätzlich kann auf dem Server der Rechenroutine und/oder der Nutzeroberfläche die Konstruktionsdatenbank angelegt sein, gegebenenfalls durch ein Passwort geschützt.

In einer bevorzugten Ausgestaltung der Erfindung sind in der Konstruktionsdatenbank Datensätze zu den Komponenten des Achsaggregats gespeichert, die vor allem die physikalisch-technischen Parameter der Komponenten betreffen. Auch können diese Parameter geeignet sein, die exakte visuelle Gestalt der Komponenten wiederzugeben. Diese Datensätze können in allen geeigneten Datenformaten abgespeichert sein, seien es Text-, Tabellen-, Bild-, CAD-, numerische oder andere technische Datenformate. Dadurch, dass in der Konstruktionsdatenbank Datensätze zu den auswählbaren Komponenten des Achsaggregats gespeichert sind, können diese schnell abgerufen werden und stehen zur unmittelbaren, automatisierten Weiterverarbeitung zur Verfügung. Ein manuelles Erstellen bzw. Auswählen solcher Datensätze, wie es beispielsweise bei herkömmlichen Kundenanfragen vorkommt, wird somit vermieden.

In einer weiteren bevorzugten Ausgestaltung der Erfindung ist die Verknüpfungsroutine in die Rechenroutine integriert. Dies spart einerseits Speicherplatz und ermöglicht andererseits eine optimierte Interaktion der verschiedenen die Konfiguration umfassenden Rechenprozesse.

Zudem ist erfindungsgemäß vorteilhaft, dass die Konstruktionsdaten und der konvertierte Kombinationsdatensatz in demselben Format vorliegen, vorzugsweise in einem CAD oder 3D-CAD Format. Dadurch lassen sich die Daten schnell und einfach zu einem Gesamtdatensatz kombinieren, der vom Nutzer mit einem geeigneten Programm angezeigt und weiterverwendet werden kann. Umgangen wird eine aufwendige Umwandlung und Anpassung der Datenformate durch den Kunden. Die Konfiguration des Nutzfahrzeugs wird dadurch deutlich vereinfacht und das erfindungsgemäße Verfahren benutzerfreundlich.

Gemäß einer weiteren Ausgestaltung der Erfindung ist von Vorteil, dass die sich aus dem konvertierten Kombinationsdatensatz und den Konstruktionsdaten zusammensetzende Datei in Grafikformaten, Textformaten oder numerischen Formaten vorliegen kann und als solche exportierbar ist. Dies ermöglicht eine hohe Flexibilität für Kundenwünsche und eine schnelle Weiterverarbeitung der erhaltenen Daten.

Vorteilhafte Ausgestaltungen des erfindungsgemäßen Verfahrens sind in den Unteransprüchen angegeben.

Das erfindungsgemäße Verfahren wird anhand zweier in Verfahrensschemata dargestellter Ausführungsbeispiele näher erläutert. Es zeigen:
- Fig. 1: Verfahrensschema gemäß einer ersten Ausführungsform der Erfindung;
- Fig. 2: Verfahrensschema gemäß einer zweiten Ausführungsform der Erfindung.

Bei dem erfindungsgemäßen Verfahren handelt es sich um ein Verfahren zur datenbankgestützten Konfigurierung und Visualisierung eines aus einem Fahrzeugchassis und einem dazu passenden Achsaggregat kombinierbaren Nutzfahrzeugs. Dabei ist das Achsaggregat ein Produkt eines spezialisierten Zulieferers und das Fahrzeugchassis ein Produkt des Kunden, insbesondere eines Nutzfahrzeugherstellers. Üblicherweise umfasst ein Achsaggregat zumindest zwei Achslenker, zwei Luftfederbälge für die Fahrzeugfederung, den Achskörper, und an jedem Achskörperende eine Radnabe sowie eine Fahrzeugbremse in der Bauart als Trommelbremse oder als Scheibenbremse.

Das Verfahren ermöglicht es dem Kunden also, ein zu seinem Fahrzeug und Fahrzeugchassis passendes Achsaggregat zu konfigurieren und gemeinsam mit dem Fahrzeug bzw. dem Fahrzeugchassis zu visualisieren.

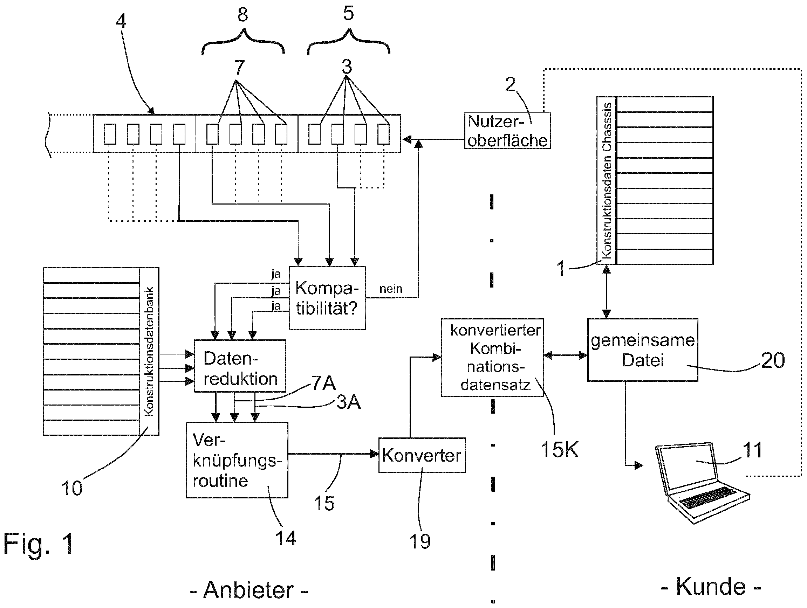

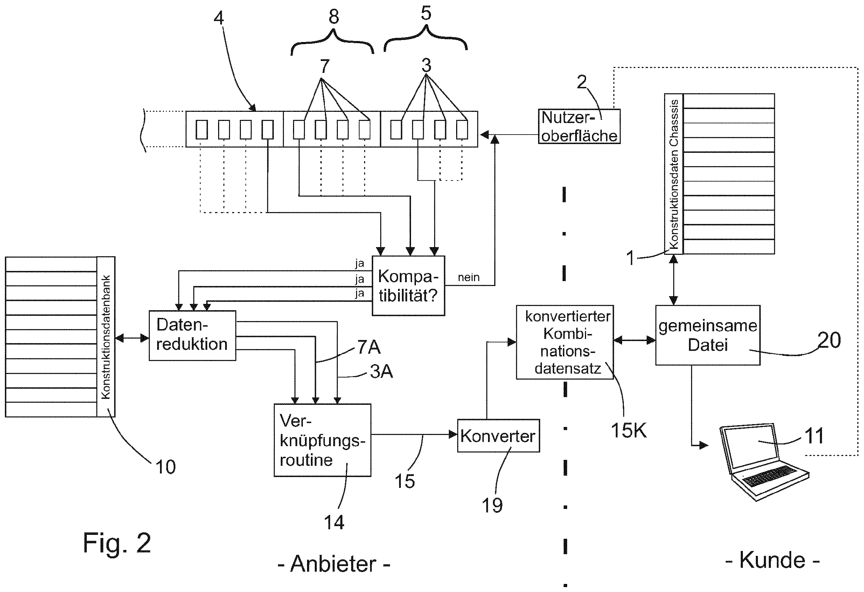

In Fig. 1 und 2 ist der Ablauf des erfindungsgemäßen Verfahrens schematisch dargestellt. Gemäß Fig. 1 liegen dem Kunden seine kundeneigenen Konstruktionsdaten 1 zu dem von ihm vertriebenen Fahrzeugchassis vor. Diese Daten 1 können in einer Konstruktionsdatenbank des Kunden gespeichert sein, oder als einzelne Datensätze vorliegen. Ein gewerblicher Kunde wird die Datensätze jedoch bevorzugt in einer professionellen Konstruktionsdatenbank ablegen, zu der nur er Zugriff hat.

In einem ersten Schritt wählt der Kunde über eine geeignete Nutzeroberfläche 2 eines Konfigurators die zu seinem Fahrzeugchassis passenden Komponenten 3, 7 eines Achsaggregats aus. Auf die Nutzeroberfläche 2, die Server- oder webbasiert sein kann, kann der Kunde z. B. über einen Rechner 11 zugreifen. Der Zugriff ist nur nach Freigabe durch den Anbieter des Achsaggregats möglich. Der Konfigurator 4 ermöglicht es dem Kunden, ohne Preisgabe eigener Konstruktionsdaten, die für ihn geeigneten Komponenten 3, 7 des Achsaggregats auszuwählen. Die Komponenten 3, 7 des Achsaggregats können dabei in verschiedenen Auswahlgruppen 5, 8, zusammengefasst in einer Datenbank 4 des Konfigurators gespeichert sein. Die Auswahl der Komponenten 3, 7 aus der Datenbank 4 kann dabei per Mausklick oder Drag-and-Drop erfolgen.

Nach der Auswahl einer ersten Komponenten 3 des Achsaggregats aus einer in der Datenbank 4 des Konfigurators zusammengefassten Gruppe 5 erster Komponenten 3 und mindestens einer zweiten Komponente 7 des Achsaggregats aus einer in der Datenbank 4 zusammengefassten Gruppe 8 zweiter Komponenten 7 wird die Kompatibilität der so ausgewählten Komponenten 3, 7 untereinander und für den vom Kunden gewünschten Einsatzzweck überprüft. Je nach Anforderung kann die Anzahl der Gruppen und der darin zusammengefassten Komponenten variieren.

Die Auswahl des Kunden wird an eine Rechenroutine weitergegeben, und darin die Kompatibilität überprüft. Dabei wird unter anderem überprüft, ob die mechanischen Verbindungen der ausgewählten Komponenten 3, 7 zueinander korrespondieren und/oder ob die Belastungsauslegung der Komponenten 3, 7 zusammen passt. Sollten die Komponenten 3, 7 nicht kompatibel sein, so wird eine Negativfeststellung getroffen und dem Kunden über die Nutzeroberfläche 2 angezeigt. Auch kann die Negativfeststellung dem Kunden per gesonderter E-Mail mitgeteilt werden.

Der Kunde kann seine Komponentenauswahl nach der Negativfeststellung über die Nutzeroberfläche 2 korrigieren, eine neue Auswahl beginnen oder den Vorgang beenden.

Sollten die vom Kunden ausgewählten Komponenten 3, 7 zueinander korrespondieren, so wird eine Positivfeststellung getroffen. In diesem Fall werden zu den konfigurierten Komponenten 3, 7 jeweils Datensätze aus einer Konstruktionsdatenbank 10 des Anbieters in eine Verknüpfungsroutine eingespeist. Zunächst jedoch werden diese sehr detaillierten Datensätze hinsichtlich ihrer Datengröße reduziert, und zu reduzierten Datensätzen 3A, 7A weiterverarbeitet. Dies kann beispielsweise mit einem mit der Rechenroutine in Verbindung stehendem externen Programm durchgeführt werden, oder von der Rechenroutine selbst. Die Datenreduzierung erfolgt, damit keine detaillierten technischen Daten aus der Konstruktionsdatenbank 10, die nur den Anbieter selbst interessieren bzw. sein streng gehütetes Betriebsgeheimnis sind, für Kundenzwecke verwendet werden.

Anschließend werden die reduzierten Datensätze 3A, 7A mittels einer Verknüpfungsroutine 14 zu einem die Komponenten des Achsaggregats in ihrem zusammengebautem Zustand beschreibenden Kombinationsdatensatz 15 verknüpft. Verknüpfungskriterium ist insbesondere die Position und die Anordnung der mechanischen Verbindungen der einzelnen Komponenten 3, 7.

Im Unterschied zur Ausführungsform nach Fig. 1 ist in dem Verfahrensschema nach Fig. 2 wesentlich, dass im Anschluss an den Kompatibilitätsvergleich der Komponenten 3, 7, die diesen Komponenten zugehörigen Datensätze bzw. die Positivfeststellung auf einen gesonderten Server zur Datenreduktion weitergeleitet wird, der mit der Konstruktionsdatenbank 10 des Anbieters interagiert oder die Konstruktionsdatenbank 10 beinhaltet. Erst auf dem separaten Server werden dann aus der Konstruktionsdatenbank 10 die zu den konfigurierten Komponenten 3, 7 passenden Konstruktionsdatensätze aufgerufen, anschließend in ihrer Datenmenge oder Datengröße zu den Datensätzen 3A,7A reduziert und an die Verknüpfungsroutine 14 weitergeleitet.

In beiden Ausführungsformen wird der verknüpfte Kombinationsdatensatz 15 mit einem Konverter 19 in ein Datenformat umgewandelt, welches zu dem Konstruktionsdatenformat auf Kundenseite kompatibel ist, also zu den Konstruktionsdaten, welche der Fahrzeughersteller intern verwendet. Der so konvertierte Kombinationsdatensatz 15K wird vom Anbieter für die Verwendung durch den Kunden freigegeben.

Vom Kunden kann dann aus den eigenen Konstruktionsdaten des Fahrzeugchassis und dem das konfigurierte Achsaggregat wiedergebenden, konvertierten Kombinationsdatensatz 15K eine gemeinsame Datei 20 erstellt und diese bei Bedarf mit einem geeigneten Programm auf einem Rechner 11 oder einem Bildschirm visualisiert werden. Diese Datei 20 kann der Kunde dafür verwenden, um dem eigenen Kunden, also dem potentiellen Käufer eines Fahrzeugs, das Endprodukt in seiner Gesamtheit darstellen zu können.

### Bezugszeichenliste

- 1: Konstruktionsdaten
- 2: Nutzeroberfläche
- 3: Komponente
- 3A: Datensatz
- 4: Konfigurator
- 5: Gruppe
- 7: Komponente
- 7A: Datensatz
- 8: Gruppe
- 10: Konstruktionsdatenbank
- 11: Rechner
- 14: Verknüpfungsroutine
- 15: Kombinationsdatensatz
- 15K: konvertierter Kombinationsdatensatz
- 19: Konverter
- 20: gemeinsame Datei

## Patentansprüche

1. Verfahren zur datenbankgestützten Konfigurierung und Visualisierung eines aus einem Fahrzeugchassis und einem dazu passenden Achsaggregat kombinierbaren Nutzfahrzeugs, wobei das Achsaggregat Produkt eines Anbieters, und das Fahrzeugchassis Produkt eines Kunden ist, und nur dem Kunden Konstruktionsdaten (1) des Fahrzeugchassis in einem Konstruktionsdatenformat vorliegen,
bei dem auf einer durch den Anbieter für den Kunden freigeschalteten Nutzeroberfläche (2) die Konfigurierung des Achsaggregats erfolgt durch
- Auswahl einer ersten Komponente (3) des Achsaggregats aus einer in einer Datenbank (4) zusammengefassten Gruppe (5) erster Komponenten (3),
- Auswahl mindestens einer weiteren Komponente (7) des Achsaggregats aus einer in der Datenbank (4) zusammengefassten Gruppe (8) weiterer Komponenten (7),
- einen spätestens nach dem letzten Auswahlschritt mittels einer Rechenroutine durchgeführten Vergleich der Kompatibilität der Komponenten (3, 7), wobei Vergleichsparameter das Korrespondieren der mechanischen Verbindungen der Komponenten (3, 7) und/oder der Belastungsauslegung der Komponenten (3, 7) sind, und bei dem die Visualisierung erfolgt, indem zu den konfigurierten Komponenten (3, 7) jeweils Datensätze (3A, 7A) aufgerufen werden, welche im Wege einer Datenreduktion aus den in einer Konstruktionsdatenbank (10) gespeicherten Konstruktionsdatensätzen der Komponenten (3, 7) abgeleitet sind,
- mittels einer Verknüpfungsroutine (14) die Datensätze zu einem die Komponenten (3, 7) des Achsaggregats in zusammengebautem Zustand beschreiben- den Kombinationsdatensatz (15) verknüpft werden, wobei Verknüpfungskriteri- um die Position und die Anordnung der mechanischen Verbindungen der Komponenten (3, 7) sind,
- der Kombinationsdatensatz (15) in ein Datenformat konvertiert wird, welches zu dem Konstruktionsdatenformat kompatibel ist, und der so konvertierte Kombinationsdatensatz (15K) zur Verwendung durch den Kunden freigeschaltet wird,
- kundenseitig aus den Konstruktionsdaten (1) des Fahrzeugchassis und dem konvertierten Kombinationsdatensatz (15K) eine gemeinsame Datei (20) erstellt, und diese auf einem Bildschirm visualisiert wird.

2. Verfahren nach einem der vorangehenden Ansprüche, **dadurch gekennzeichnet, dass** die Rechenroutine mit der Nutzeroberfläche (2) gekoppelt ist.

3. Verfahren nach einem der vorangehenden Ansprüche, **dadurch gekennzeichnet, dass** in der Konstruktionsdatenbank (10) Datensätze zu den Komponenten (3, 7) des Achsaggregats gespeichert sind, die physikalisch-technische Parameter der Komponenten (3, 7) betreffen.

4. Verfahren nach Anspruch 3, **dadurch gekennzeichnet, dass** die Verknüpfungsroutine in die Rechenroutine integriert ist.

5. Verfahren gemäß einem der vorigen Ansprüche, wobei Peripherieelemente der Bremsanlage als weitere konfigurierbare Komponenten des Achsaggregats auswählbar sind.

6. Verfahren gemäß einem der vorigen Ansprüche, wobei die Auswahl der Komponenten des Achsaggregats in Abhängigkeit von der Tonnage des Fahrzeugs erfolgt.

7. Verfahren gemäß einem der vorigen Ansprüche, wobei die Kompatibilitätsprüfung zusätzlich Parameter umfasst, die die Anschlussmaße und -geometrien der Komponenten des Achsaggregats (3) betreffen.

8. Verfahren gemäß einem der vorigen Ansprüche, wobei die Kompatibilitätsprüfung Parameter umfasst, die die Fahrzeugfederung der Komponenten berücksichtigen.

9. Verfahren gemäß einem der vorigen Ansprüche, wobei eine Negativfeststellung getroffen wird, wenn die mechanischen Verbindungen der ausgewählten Komponenten (3, 7) nicht zueinander korrespondieren und/oder wenn die Belastungsauslegung der Komponenten (3, 7) nicht zusammen passt.

10. Verfahren gemäß Anspruch 9, wobei die Negativfeststellung über die Nutzeroberfläche (2) angezeigt und/oder per E-Mail an den Kunden gesendet wird.

11. Verfahren gemäß einem der vorigen Ansprüche, wobei eine Positivfeststellung getroffen wird, wenn die vom Kunden ausgewählten Komponenten (3, 7) zueinander korrespondieren und/oder wenn die mechanischen Verbindungen der ausgewählten Komponenten (3, 7) zueinander korrespondieren und/oder wenn die Belastungsauslegung der Komponenten (3, 7) zusammen passt.

12. Verfahren gemäß dem Anspruch 11, wobei nach dem Kompatibilitätsvergleich die Positivfeststellung auf einen gesonderten Server zur Datenreduktion weitergeleitet wird.

13. Verfahren gemäß dem Anspruch 11 oder 12, wobei der separate Server zur Datenreduktion mit der Konstruktionsdatenbank (10) des Anbieters interagiert.

14. Verfahren gemäß einem der Ansprüche 11 bis 13, wobei die Konstruktionsdatenbank (10) auf dem separaten Server zur Datenreduktion gespeichert ist.

15. Verfahren gemäß einem der Ansprüche 11 bis 14, wobei die Konstruktionsdatensätze der konfigurierten Komponenten (3, 7) auf dem separaten Server in ihrer Datengröße zu reduzierten Datensätzen (3A, 7A) verarbeitet werden.

16. Verfahren gemäß einem der Ansprüche 11 bis 15, wobei die reduzierten Datensätze (3A, 7A) von dem separaten Server an die Verknüpfungsroutine (14) weitergeleitet werden.

17. Verfahren gemäß einem der vorigen Ansprüche, wobei die Konstruktionsdatensätze der Komponenten in Formaten gespeichert sind, die geeignet sind, die exakte visuelle Gestalt der Komponenten darzustellen.

18. Verfahren gemäß einem der vorigen Ansprüche, wobei die Verknüpfungsroutine als zentraler Verarbeitungsschritt zur Erzeugung des die Komponenten (3, 7) des Achsaggregats in zusammengebautem Zustand beschreibenden Kombinationsdatensatzes (15) dient, der die Position und Anordnung der mechanischen Verbindungen der Komponenten (3, 7) umfasst.

19. Verfahren gemäß einem der vorigen Ansprüche, wobei die Datenreduktion der Konstruktionsdatensätze der Komponenten (3, 7) durchgeführt wird, um detaillierte technische Daten des Anbieters zu verbergen und somit das technische Know-how des Anbieters zu schützen.

20. Verfahren gemäß einem der vorigen Ansprüche, wobei die Rechenroutine und die Nutzeroberfläche auf verschiedenen Servern betrieben werden, die signaltechnisch miteinander kommunizieren.

21. Verfahren gemäß einem der vorigen Ansprüche, wobei der Kombinationsdatensatz in ein mit dem Konstruktionsdatenformat des Kunden kompatibles Format konvertiert wird.

22. Verfahren gemäß einem der vorigen Ansprüche, wobei die gemeinsame Datei (20) verwendet wird, um dem Kunden die Darstellung des Endprodukts in seiner Gesamtheit zu ermöglichen.
